# EUROPÄISCHE PATENTANMELDUNG

(11) **EP 2 151 702 A2**
(43) Veröffentlichungstag der Anmeldung: **10.02.2010**
(21) Anmeldenummer: 09161473.5
(22) Anmeldetag: 29.05.2009
(51) Int. Cl.: G02B 21/26, F15B 15/14

(54) **Hydraulische Positionierungseinheit**

(30) Priorität: 27.06.2008 DE 102008030981
(71) Anmelder: BAM Bundesanstalt für Materialforschung und- Prüfung, 12205 Berlin (DE)
(72) Erfinder: Dworak, Volker, 14558 Nuthetal (DE); Selbeck, Jörn, 14476 Postdam OT Fahrland (DE); Sturm, Heinz, Dr., 12205 Berlin (DE)
(74) Vertreter: Gulde Hengelhaupt Ziebig & Schneider

(57) **Zusammenfassung**

Die Erfindung betrifft eine hydraulische Positionierungseinheit mit einer hydraulisch wirkenden Kolben-Zylinder-Einheit (100) zur Realisierung einer Verstellbewegung eines Aktuators.

Es ist vorgesehen, dass der Außendurchmesser des Kolbens (110) und der Innendurchmesser des Zylinders (120) derart dimensioniert und geformt ist, dass ein Bypass (130) zwischen der Zylinder-Innenmantelfläche und der Mantelfläche des Kolbens (110) besteht zur Ausbildung eines Raumes, der im Betriebszustand der Positionierungseinheit mit Hydraulikflüssigkeit befüllt ist.

## Beschreibung

Die vorliegende Erfindung betrifft eine hydraulische Positionierungseinheit sowie ein Verfahren zur Betätigung dieser Positionierungseinheit und eine Verwendung der Positionierungseinheit, sowie eine die erfindungsgemäße hydraulische Positionierungseinheit umfassende Tischeinheit oder Scannereinheit eines Mikroskops.

Eine Positionierungseinheit dient vor allem zum Bewegen eines Aktuators oder auch zum gesteuerten Anfahren eines bestimmten Punktes im Raum und Fixierung des Aktuators in dieser Position. Dabei wird üblicherweise eine schnelle, präzise und reproduzierbare Bewegung gefordert. Das heißt, dass ein gewünschter Punkt im Raum innerhalb kürzester Zeit und mit minimalem Regelungsbedarf angefahren werden soll, wobei die Positionierungsgenauigkeit im Nanometer-Bereich liegen kann. Schwingungen sowie unterschiedliches Ausdehnungsverhalten bei Temperaturänderungen sowie größeres Eigengewicht wirken sich dabei wenigstens auf die Positioniergenauigkeit ungünstig aus.

Konstruktive Veränderungen von Positionierungseinheiten zur Verbesserung bestimmter Eigenschaften führen oftmals zu unterwünschten Nebeneffekten, bei deren Auftreten die weiteren Zielparameter nicht erreicht werden können. So wirkt sich z.B. eine Gewichtserhöhung zur Reduzierung oder Minimierung von Schwingungen ungünstig auf die Verfahrgeschwindigkeit aus. Zu leicht gestaltete Bauteile wiederum können zu Problemen mit der Positioniergenauigkeit aufgrund verstärkter Verformung unter Eigengewichtseinfluss führen. Eine gewünschte hochgenaue Positionierungsfähigkeit wiederum steht im Widerspruch zu einer kostengünstigen Fertigung der Positionierungseinheit.

Aus der folgenden Aufzählung der im Stand der Technik bekannten Positionierungseinheiten wird deutlich, worin die Probleme von derzeit bekannten Positionierungseinheiten bestehen, die kostengünstig eine schnelle Verfahrbewegung bei präziser und reproduzierbarer Positionierungsgenauigkeit realisieren sollen.

Insbesondere zur Realisierung von Wegstrecken von über 100 µm bei einer Positioniergenauigkeit im Nanometer-Bereich sind z.B. elektrische Antriebe bekannt, die einen Schrittmotor umfassen, der z.B. über ein Zahnradgetriebe mit einer Spindel verbunden ist und somit bei Drehbewegung eine translatorische Bewegung eines auf der Spindel angeordneten Gewindestückes verursacht. Bei einem derartigen Spindeltrieb wirken verschiedene Bauteile mechanisch miteinander, wobei sie beim Anfahren des Schrittmotors von einem Ruhezustand ausgehend beschleunigt werden. Dabei gleiten verschiedene Bauteile aufeinander, wodurch der Stick-Slip-Effekt hervorgerufen wird. Dieser Stick-Slip-Effekt beruht darauf, dass die Haftreibung (im Ruhezustand) größer ist als die Gleitreibung. Das heißt, dass bei Einleitung einer Kraft oder eines Drehmomentes in den Spindeltrieb der gesamte Aufbau zunächst elastisch deformiert wird, und zwar so lange, bis die Haftreibungskraft überwunden wird. Die in der gesamten Einrichtung aufgrund der elastischen Verformung gespeicherte mechanische Energie wird bei Überschreiten der Haftreibungskraft schlagartig freigesetzt, wodurch es zu einer diskontinuierlichen Vorwärtsbewegung der beweglichen Bauteile der Einrichtung kommt. Bei einem Unterschreiten der Haftreibungskraft haften die aneinander gleitenden Bauteile wieder, so dass bei einer anschließenden Erhöhung des Antriebsmomentes wieder die elastischen Verformungen und schlagartige Freisetzung von Rückfederungsenergie erfolgt. Dies führt dazu, dass der gesamte Antrieb ruckartig bewegt wird. Dabei sind die Abstände zwischen den Sprüngen, in Abhängigkeit vom der Steifigkeit des Systems, im atomaren Bereich bis Millimeterbereich. Für Positionierungssysteme mit angestrebter außerordentlich feiner Positioniergenauigkeit, wie z.B. im Mikro- und Nanometer-Bereich, ist dies nicht akzeptabel, weil dort konstante Verfahrgeschwindigkeiten und schwingungsfreies Anfahren erfolgen soll.

Zur Vermeidung von Stick-Slip-Effekten werden z.B. Luft- oder Magnetlager verwendet, die allerdings den Nachteil haben, dass sie eine geringe Steifigkeit senkrecht zur Bewegungsrichtung von anzutreibenden Bauteilen aufweisen. Dieser geringe Steifigkeitswert begünstigt ein unerwünschtes Vibrationsverhalten, welches sich nachteilig auf die Positionierungsgenauigkeit auswirkt.

Es ist des weiteren bekannt, für Positionierungssysteme, die im Mikro- und Nanometer-Bereich positionierbar sind, piezoelektrische Antriebe zu verwenden. Dabei lassen sich Röhrchenpiezos und Piezostapel einsetzen, die in Abhängigkeit ihrer Bauform mittels einer angelegten Spannung ihre Länge ändern, wobei die Längenänderung über geeignete Getriebe unter- oder übersetzt werden kann. Ein Nachteil dieser Positionierungssysteme liegt in ihrem Hystereseverhalten und in ihrer zusätzlichen Nichtlinearität. Sehr ungünstig ist weiterhin, dass Wegstrecken z.B. von über 100 µm mit Piezoelementen kaum realisiert werden können, da zur Fortbewegung über eine derartige Distanz relativ viele Piezoplättchen miteinander verbunden werden müssten, was den gesamten Aufbau kostenintensiv und relativ weich und schwingungsanfällig gestaltet. Ebenfalls sind die durch Piezostapel erzielbaren Kräfte begrenzt.

Eine Sonderausführung von mit Piezo-Elementen angetriebenen Positionierungseinheiten sind durch Scherpiezos angetriebene Aktuatoren, wobei die Scherpiezos nach dem Walkerprinzip arbeiten. Zwar lässt sich durch die schrittweise Schaltung und Bewegung einzelner Scherpiezos ein relativ langer Weg realisieren und insgesamt akzeptable Verstellkräfte bewirken, jedoch wird durch die nichtkontinuierliche Bewegung und die geringe Verfahrgeschwindigkeit auch diese Antriebsweise nicht den genannten Anforderungen gerecht.

Weitere Ansätze für Positionierungseinheiten mit Nanometer-Auflösung liegen in speziell ausgestalteten pneumatischen Antrieben, mittels denen im wesentlichen große Verfahrgeschwindigkeiten bei ausreichender Positioniergenauigkeit realisiert werden können. Der Nachteil der pneumatischen Antriebe liegt allerdings in der Verwendung von Druckgas, welches kompressibel ist und somit nicht gewährleisten kann, dass in kostengünstiger Weise eine Einrichtung zur Verfügung gestellt wird, die bei unterschiedlicher Gegenkraftbeaufschlagung bestimmte Punkte im Raum mit der gleichen Geschwindigkeit und der gleichen Positionierungsgenauigkeit anfahren kann.

Zwar sind letztendlich die gewünschten Positionen erreichbar, allerdings ist dafür ein erhöhter Regelaufwand notwendig, der insgesamt den Zeitbedarf für eine Verfahrbewegung erhöht und außerdem eine relativ kostenintensive Regelungseinheit voraussetzt.

Eine weitere Alternative zur Realisierung einer Positionierungseinrichtung ist die Verwendung von hydraulischen Bauelementen. Es beschreibt z.B. das US-Patent 4.560.880 eine Verfahr- und Positionierungseinheit für die Abstandskontrolle in der Elektronenstrahllithographie. Es wird hierbei vorgeschlagen, Faltenbälge einzusetzen, die mittels einer Hydraulikpumpe mit Hydrauliköl befüllt werden können und dadurch derart ihre Länge verändern können, dass Bewegungsänderungen von etwa 400 µm ermöglicht werden. Nachteilig an dieser Ausführungsform ist die große Anfälligkeit für unerwünschte Kippbewegungen. Des weiteren ist der auf den genannten Mikrometerbereich eingeschränkte Bewegungshub zu klein für einige Anwendungsgebiete.

Ein weiteres hydraulisches Prinzip ist im US-Patent 4,514,858 beschrieben, wobei hier ein Silizium-Waver mit einem hydraulisch angetriebenen Kolben auf eine bestimmte Position verfahren wird. Mittels dieser Einrichtung ist zwar das Anfahren einer bestimmten Position zuverlässig realisierbar, jedoch ist die Fixierung des Aktuators in der angefahrenen Position nur in eingeschränktem Maße möglich. Nachteilig an dieser Ausführungsform ist weiterhin, dass diese einen Dichtring aufweist, wodurch es aufgrund der Haftreibung des Dichtringes auf der Zylindermantelfläche zum Stick-Slip-Effekt kommt. Dies führt in beschriebener Art und Weise zu einem diskontinuierlichen Verfahren der Positionierungseinrichtung sowie zur Einleitung von unerwünschten Schwingungen und zu Schwierigkeiten des Erreichens der gewünschten Endposition.

Weitere hydraulische Ansätze umfassen die Realisierung einer translatorischen Bewegung durch Formänderungen dünnwandiger Bauteile bei Druckerhöhung im Inneren dieser Bauteile, wie z.B. in den US-Dokumenten 2002/0152627 A1 und 2003/0159608 A1 offenbart. Der gravierende Nachteil dieser Ausführungsformen liegt im nur geringen Verfahrweg.

Der Erfindung liegt daher die Aufgabe zugrunde, eine Positionierungseinheit zur Verfügung zu stellen, mittels derer große Verfahrwege im Millimeterbereich realisiert werden können, wobei die erreichbare Positionsgenauigkeit im Sub-Nanometer-Bereich liegen soll, die Bewegung zur Erreichung der gewünschten Position gleichmäßig erfolgen soll und die Soll-Position auch bei Aufbringung größerer und schwankender Gegenkräfte auf die Positionierungseinheit aufgrund ausreichender mechanischer Steifigkeit zuverlässig gehalten werden kann.

Diese Aufgabe wird durch die im Anspruch 1 genannte hydraulische Positionierungseinheit gelöst. Vorteilhafte Ausgestaltungen der erfindungsgemäßen Positionierungseinheit schließen sich in den Ansprüchen 2 bis 10 an. Außerdem wir die Aufgabe durch ein Verfahren zur Betätigung der erfindungsgemäßen Positionierungseinheit sowie vorteilhafte Verwendungen für die erfindungsgemäße Positionierungseinheit gemäß der Ansprüche 11 bis 15 gelöst.

Die Erfindung besteht darin, dass eine hydraulische Positionierungseinheit mit einer beidseitig druckbeaufschlagbaren hydraulisch wirkenden Kolben-Zylinder-Einheit zur Realisierung einer Verstellbewegung eines Aktuators zur Verfügung gestellt wird, wobei der Außendurchmesser des Kolbens und der Innendurchmesser des Zylinders derart dimensioniert und geformt ist, dass ein Bypass zwischen der Zylinder-Innenmantelfläche und der Mantelfläche des Kolbens besteht zur Ausbildung eines Raumes, der im Betriebszustand der Positionierungseinheit mit Hydraulikflüssigkeit befüllt ist. Das heißt, dass im Bereich des Bypasses keine Elemente zwischen der Kolbenmantelfläche und der Zylindermangelfläche angeordnet sind, die mechanisch eine Verbindung zwischen Kolben und Zylinder herstellen. Es ist somit im Gegensatz zu aus dem Stand der Technik bekannten Ausführungsformen kein Dichtring vorgesehen, so dass in der erfindungsgemäßen Positionierungseinheit auch kein Stick-Slip-Effekt auftreten kann, da im Bereich des Bypasses der Kolben auf bzw. in einer Hydraulikflüssigkeitsschicht, die ihn zumindest teilweise umgibt, schwimmt. Durch die Ausbildung des Flüssigkeitspolsters wird der mechanische Kontakt zumindest eines Teilbereiches des Kolbens mit dem Zylinder verhindert, wodurch eine Haftreibung des Kolbens während seiner Bewegung im Zylinder weitgehend verhindert, wenn nicht sogar eliminiert wird. Durch die Weglassung des üblicherweise am Kolben angeordneten Dichtringes kann der Kolben auf oder an dem Flüssigkeitspolster gleiten. Dieser Bypass bzw. das dadurch ausgebildete Flüssigkeitspolster ist wesentlich dicker oder weist eine wesentliche größere Tiefe auf als der Ölfilm, auf dem ein Dichtring eines herkömmlichen Kolbens im Zylinder gleitet. Das heißt, der Bypass ist mindestens doppelt so dick wie der bei herkömmlichen Kolben-Zylinder-Einheiten bestimmter Größe verwendete Schmierfilm. Die Hydraulikflüssigkeit im Bypass wird durch den Kolben bei dessen Bewegung nicht mitgeschleppt, wie es bei herkömmlichen Kolben-Zylinder-Einheiten und normal dicken Schmierfilmen bei Verwendung eines Dichtringes geschieht, sondern vielmehr schwimmt der Kolben auf oder in dem Fluid in dem durch den Bypass realisierten Raum. Es findet demzufolge im Wesentlichen keine Relativbewegung zwischen dem Kolben und den Teilchen der im Bypass enthaltenen Flüssigkeit statt.

In einer vorteilhaften Ausführungsform ist vorgesehen, dass der Außendurchmesser des Kolbens und der Innendurchmesser des Zylinders derart dimensioniert und geformt ist, dass der Raum für die Flüssigkeit zwischen Kolben und Zylinder derart groß und geformt ist, dass zumindest bei wenigstens einseitiger Druckbeaufschlagung des Kolbens durch Hydraulikflüssigkeit der Kolben im Zylinder vollständig schwimmend lagerbar ist. Hierzu bietet sich eine koaxiale Ausführungsform von Kolben und Zylinder an, d.h. dass Kolben und Zylinder rotationssymmetrisch ausgeprägt sind, so dass sich bei einer zentrierten Lagerung des Kolbens und Zylinders ein Bypass in Ringform um den Kolben herum herausbildet. Ein derartiger Bypass sorgt dafür, dass der Kolben im Zylinder beim Betrieb der Positionierungseinheit vollständig schwimmend gelagert ist. Somit werden Stick-Slip-Effekte zwischen Kolben und Zylinder bei der Kolbenbewegung vollständig vermieden. Die statischen Druckverhältnisse sowie Abstützungen an der Kolbenstange können dabei die zentrierte Lagerung des Kolbens im Zylinder unterstützen. Die schwimmende Lagerung stellt sich insbesondere dann ein, wenn der Kolben mit Hydraulikflüssigkeitsdruck beaufschlagt ist. Vorteilhafterweise sollte sie sich aber auch dann einstellen, wenn sich die Kolben-Zylinder-Einheit im Ruhezustand befindet, also momentan nicht druckbeaufschlagt ist. Dies ist insbesondere dann gegeben, wenn die Kolben-Zylinder-Einheit senkrecht angeordnet ist.

In einer besonders bevorzugten Ausgestaltung ist vorgesehen, dass die Kolben-Zylinder-Einheit beidseitig druckbeaufschlagbar ist, wobei der Außendurchmesser des Kolbens und der Innendurchmesser des Zylinders derart dimensioniert und geformt ist, dass durch den Bypass wenigstens ein Überstromkanal zum Überströmen von Hydraulikflüssigkeit von der flüssigkeitsdruckbeaufschlagten Seite des Kolbens zu dessen gegenüber liegende Seite ausgebildet ist.

Das heißt, dass ein doppelt wirkender Kolben verwendet wird, der von beiden Seiten mit Hydraulikflüssigkeit zu betätigen ist. Beim beidseitig wirkenden Kolben existieren an beiden Stirnseiten Räume für Flüssigkeitsvolumen, welche durch eine oder mehrere Pumpen mit Hydraulikflüssigkeit beschickt werden können. Zum Betrieb des Kolbens wird eine seiner Seiten mit einem Flüssigkeitsdruck durch den Pumpbetrieb beaufschlagt. Der Raum an der gegenüber liegenden Seite des Kolbens wird durch Ventile geöffnet, so dass sich der Kolben im Zylinder verschieben kann. Der Unterschied zu herkömmlichen Kolben-Zylinder-Einheiten besteht darin, dass bei diesen ein Dichtring den Kolben zum Zylinder hin vollständig abdichtet, so dass keine Hydraulikflüssigkeit von der einen Seite des Kolbens zu seiner anderen Seite an seiner Mantelfläche vorbei strömen kann, während bei der erfindungsgemäßen Einrichtung Flüssigkeit am Kolben vorbei strömen kann.

Das heißt, dass in den herkömmlichen Ausführungsformen sämtlicher von einer Pumpe erzeugter Volumenstrom zur Erhöhung des Drucks auf den Kolben dient und somit zur Generierung einer Kraft zur Verschiebung des Kolbens im Zylinder genutzt wird. Im Gegensatz dazu wird mit der erfindungsgemäßen Positionierungseinheit und dem darin eingerichteten Bypass realisiert, dass nicht der volle durch die Pumpe erzeugte Volumenstrom einen Druck generiert, der am Kolben anliegt, sondern dass durch den Bypass ein bestimmter Anteil des Volumenstroms am Kolben vorbei erzeugt wird, so dass sich der auf die Stirnseite des Kolbens wirkende Druck vermindert und somit die Kraft zur Verschiebung des Kolbens verringert ist. Die Flussrichtung des Volumenstroms ist dabei die gleiche wie die Bewegungsrichtung des druckbeaufschlagten Kolbens.

Des weiteren bewirkt das Überströmen der Hydraulikflüssigkeit von der druckbeaufschlagten Seite des Kolbens zu dessen anderer Seite eine Zunahme des Fluidvolumens auf der nichtflüssigkeitsbeaufschlagten Seite des Kolbens, wodurch sich der Widerstand gegen den Kolben bei bestimmter konstanter Ventilöffnung beim Verschiebevorgang erhöht. Der durch den Kolben zurückgelegte Weg verhält sich somit nicht linear zur Leistung der Pumpe, so dass außerordentlich geringe Verfahrwege des Kolbens einstellbar sind.

Bei größerer Pumpleistung dagegen kann der Volumenstrom durch den Bypass, verglichen mit dem durch die Pumpe insgesamt aufgebrachten Volumenstrom, derart gering sein, dass die Druckverringerung auf den Kolben, bedingt durch den Abfluss von Hydraulikflüssigkeit durch den Bypass, zu vernachlässigen ist, so dass durch den Kolben große Kräfte realisierbar sind und der Kolben um relativ lange Wegstrecken mit hoher Geschwindigkeit verschiebbar ist.

Bei Minderung der Pumpleistung verringert sich der durch die Pumpe erzeugte Volumenstrom und das Verhältnis zwischen dem durch den Bypass realisierten Volumenstrom zu dem durch die Pumpe erzeugten Volumenstrom, so dass auf den Kolben eine kleinere Kraft wirkt, als sie der verringerten Pumpenleistung entspricht. Es lässt sich somit durch Reduzierung der Pumpleistung z.B. nach Erreichen von 90% des zurückzulegenden Weges die Kolbenbewegung verlangsamen und mit nur geringem Regelungsaufwand mit geringer Geschwindigkeit die Sollposition im Sub-Nanometer-Bereich exakt anfahren.

Zur Gewährleistung des Volumenstroms durch den Bypass und zur schwimmenden Lagerung des Kolbens im Zylinder ist vorgesehen, dass der Durchmesser des Kolbens dK zu dem den Bypass realisierenden Abstand a zwischen Kolben und Zylinder ein Verhältnis aufweist von dK / a = 830 bis 1900. Das heißt, dass sich z.B. bei einem Kolbendurchmesser von 25 bis 28 mm ein Spalt zwischen Kolben und Zylinder mit einer Dicke von 13 bis 33 µm einstellt, der nicht durch einen Dichtring abgedichtet wird.

Die konkrete Auswahl des Spaltmaßes zwischen Kolben und Zylinder hängt dabei stark von der Viskosität der verwendeten Hydraulikflüssigkeit ab. Zur Gewährleistung eines ausreichenden Volumenstroms werden dabei Flüssigkeiten mit niedriger Viskosität bevorzugt. In einfacher Ausgestaltung werden dabei Flüssigkeiten benutzt, welche Newtonsches Verhalten aufweisen, d.h. bei welchen die Viskosität konstant ist. Für ein verbesserten Regelverhalten kann allerdings auch vorgesehen sein, dass Flüssigkeiten mit speziellen, nichtlinearen Eigenschaften eingesetzt werden wie z.B. Dilatante, scherverdünnende (pseudoplastische) Fluide oder auch Bingham-plastisches Fluid oder Casson-plastisches Fluid.

Vorzugsweise sollte das Verhältnis vom Kolbendurchmesser dK zu dem den Bypass realisierenden Abstand a zwischen Kolben und Zylinder ein Verhältnis von 830 bis 1100 aufweisen. Das heißt, dass bei vollständig schwimmender Lagerung des Kolbens im Zylinder bei z.B. einem Durchmesser des Kolbens von 25 bis 28 mm ein Ringspalt zwischen dem Kolben und dem Zylinder mit einer Dicke von a = 22 bis 33 µm einstellt. Dieses größere Ringspaltmaß wird bevorzugt, um die Berührung des Kolbens mit dem Zylinder und damit ein Auftreten des Stick-Slip-Effektes zu vermeiden und um ein Bypass zu realisieren, durch den bei Druckbeaufschlagung des Kolbens ausreichend Hydraulikflüssigkeit in die nicht-druckbeaufschlagte Seite gelangen kann.

Die Erfindung ist allerdings nicht auf die angegebenen Verhältnisse von Kolben zum Ringspaltmaß beschränkt, sondern sie lässt sich auch mit veränderten Kolbenverhältnissen zwischen Kolben und Spaltmaß bei Einsatz höher- oder niederviskoser Flüssigkeiten realisieren. Dabei ist bevorzugt beim Einsatz von höherviskosen Flüssigkeiten der Abstand zwischen Kolben und Zylinder zu vergrößern und beim Einsatz einer niederviskosen Flüssigkeit der Abstand zu verringern.
Zum Beispiel lässt sich bei Verwendung einer Flüssigkeit mit der Viskosität von 1 mPa s ein Spaltmaß von 10 nm realisieren.

Die erfindungsgemäße Positionierungseinheit ist dann vorteilhaft ausgestaltet, wenn der Kolben wenigstens eine in wenigstens einem Gleitlager im Zylinder verschiebbar gelagerte Kolbenstange aufweist, wobei das Gleitlager die Kolbenstange und somit den Kolben derart positioniert, dass sich zwischen den Mantelflächen des Kolbens und des Zylinders der Bypass als ringförmiger Spalt ausbildet. Durch dieses die Kolbenstange positionierende Gleitlager ist gewährleistet, dass der Kolben stets schwimmend im Zylinder gelagert ist und nicht einseitig an der Zylindermantelfläche zur Anlage kommt. Das Gleitlager kann dabei ein Abstreifelement bzw. eine Dichtung sein, die außerdem zum Abstreifen von an der Kolbenstange anhaftender Hydraulikflüssigkeit dient.

In einer komfortablen Ausgestaltung der Erfindung ist vorgesehen, dass auf der dem Kolben gegenüber liegenden Seite des Gleitlagers im Zylinder ein Rückführkanal angeordnet ist zur Realisierung der Rückführung von an der Kolbenstange anhaftender Hydraulikflüssigkeit in den Zylinder. Das heißt, dass für den Fall, in dem das Gleitlager nicht zum Abstreifen von an der Kolbenstange anhaftender Hydraulikflüssigkeit dienen kann bzw. aufgrund von Abnutzung anhaftende Hydraulikflüssigkeit nicht mehr vollständig abstreifen kann, ist vorgesehen, dass die hinter das Gleitlager gelangte Hydraulikflüssigkeit über den Rückführkanal z.B. einem Reservoir zugeführt wird, aus dem eine Hydraulikpumpe die Hydraulikflüssigkeit wieder ihrem Verwendungszweck zuführen kann. Bei einem Kolben mit beidseitiger Kolbenstange kann der Rückführkanal an beiden Seiten im Zylinder angeordnet sein.

Vorteilhafterweise ist die Pumpe zur Erzeugung des Volumenstroms zur Druckbeaufschlagung des Kolbens eine bidirektionale Mikroinnenzahnradpumpe.

Durch die bidirektionale Ausgestaltung der Pumpe werden im Gegensatz zu aus dem Stand der Technik bekannten Ausführungsformen keine Ventile zur Ansteuerung der Kolben-Zylinder-Einheit benötigt, da die Steuerung des Volumenstroms allein durch die Ansteuerung der Mikroinnenzahnradpumpe hinsichtlich der Pumprichtung und der Größe des Volumenstroms erfolgen kann.

Zur Erfassung der aktuellen Position des Kolbens bzw. des daran angeschlossenen Aktuators ist vorgesehen, dass die Positionierungseinheit ein Weg-Mess-System umfasst. Dieses Weg-Mess-System sollte eine Auflösung im Sub-Nanometer-Bereich haben, da der Kolben auch in einem solchen Bereich positionierbar sein soll.

Zum Zweck des automatischen Anfahrens bestimmter Positionen sowie zur Vermeidung von Positionsabweichungen bei wechselnder Gegenkraft auf den Kolben kann des weiteren vorgesehen sein, dass eine vorteilhaft ausgestaltete Positionierungseinheit eine Regelungseinheit zur geregelten Positionierung des Kolbens umfasst. Es lässt sich somit der Positionierungseinheit ein bestimmter Wert vorgeben, der dann durch die Regelung angefahren wird. Bei Abweichung der Kolbenkoordinaten vom Soll-Wert kann durch die Regelungseinheit entsprechend nachgeregelt werden. Zu diesem Zweck sollte die Positionierungseinheit ebenfalls eine Rechnereinheit aufweisen, in die der Soll-Wert der Position des Kolbens eingegeben werden kann und die die Regelung veranlasst, diesen Wert anzufahren und gegebenenfalls Korrekturbewegungen zu vollziehen, was insbesondere bei starker Gegenkraft auf den Kolben aufgrund des Volumenstroms im Bypass zu erwarten ist. Dabei liefert das Weg-Mess-System den aktuellen Ist-Wert der Kolbenposition, der mit dem Soll-Wert verglichen wird. Aus diesen Werten wird ein Differenzwert gebildet, aus dem durch den Regelkreis das Signal für die Regelungsbewegung des Kolbens generiert wird.

In einer besonderen Ausgestaltung umfasst die Positionierungseinheit zusätzlich zu dem zwischen Kolben und Zylinder angeordneten Bypass einen zweiten Bypass, wobei dieser zweite Bypass außerhalb des Zylinders angeordnet ist und ventilgesteuert ist. Dieser zweite Bypass dient zur weiteren Beeinflussung der Volumenströme in der Kolben-Zylinder-Einheit und der Drücke auf den Kolben, ohne dabei in den Volumenstrom des ersten Bypasses einzugreifen. Die Anwendung dieses zweiten Bypasses ist insbesondere bei Verwendung der Positionierungseinheit bei unterschiedlichen Temperaturen vorteilhaft, da die unterschiedlichen Temperaturverhältnisse unterschiedliche Viskositäten der Hydraulikflüssigkeit und somit unterschiedlich große Volumenströme im ersten Bypass bewirken, so dass sich bei unterschiedlichen Temperaturen auch unterschiedliche Drücke am Kolben und damit unterschiedliche Kräfte auf den Kolben einstellen, die unterschiedliche Geschwindigkeiten und Stellkräfte des Kolbens bewirken. Um dem zu begegnen lässt sich der zweite Bypass mit ventilsteuerbarer Einstellung des Volumenstroms einsetzen. Dabei kann in einer vorteilhaften Ausgestaltung vorgesehen sein, dass die Betätigung des oder der Ventile des zweiten Bypasses auch durch den Regelkreis vornehmbar ist.

Zur Gewährleistung eines störungsfreien Betriebes der Positionierungseinheit kann des weiteren vorgesehen sein, dass sie ein Reservoir zur Bereitstellung der Hydraulikflüssigkeit umfasst, welches in Gebrauchslage der Positionierungseinheit in einer höheren Lage als die Kolben-Zylinder-Einheit angeordnet ist. Mit der höheren Lage damit eine geodätisch höhere Lage gemeint, die bewirkt, dass z.B. Gasblasen in Rückführungskanälen, die mit dem Reservoir verbunden sind, in das Reservoir aufsteigen können und somit der Pumpe aus dem Reservoir gasfreie Hydraulikflüssigkeit zur Verfügung gestellt werden kann.

Erfindungsgemäß wird außerdem ein Verfahren zur Betätigung der Positionierungseinheit zur Verfügung gestellt, bei dem zum Halten der Position des gegen eine Kolbenrückstellkraft drückenden Kolbens eine Pumpe zur Druckbeaufschlagung des Kolbens ständig betrieben wird. Da durch den Bypass ständig Hydraulikflüssigkeit von der druckbeaufschlagten Seite des Kolbens auf dessen andere Seite abfließt, könnte eine Verschiebung des Kolbens entgegen der durch die Pumpe aufgebrachten Druckkraft erfolgen. Zu diesem Zweck wird die Pumpe ständig betrieben, um die gewünschte Soll-Position des Kolbens einzuhalten. Der Regelkreis kann dabei die Pumpe bei unzulässiger Abweichung des Ist-Wertes vom Soll-Wert mit entsprechender Drehzahl betätigen, so dass der Soll-Wert eingehalten wird.

Erfindungsgemäß besteht die Verwendung einer hier beschriebenen Positionierungseinheit zur Bewegung eines Positioniertisches oder eines Scanners eines Mikroskops. Mittels der erfindungsgemäßen Positionierungseinheit lässt sich der Tisch eines Mikroskops oder auch der Scanner eines Mikroskops mit höchster Genauigkeit in eine bestimmte Position verfahren. Die Genauigkeit kann dabei im Sub-Nanometer-Bereich liegen. Außerdem lässt sich der Tisch oder der Scanner wie bereits beschrieben mit großer Geschwindigkeit bewegen und gegen größere Kolbenrückstellkräfte in der Soll-Position halten.

Vorteilhafterweise ist das Mikroskop, in dem die erfindungsgemäße Positionierungseinheit eingesetzt wird, ein Rasterkraftmikroskop. Insbesondere bei derartigen Mikroskopen sind die typischen Eigenschaften der erfindungsgemäßen Positionierungseinheit zur Realisierung eines komfortablen und störungsfreien Arbeitsablaufes notwendig.

Es wird außerdem eine positionierbare Tischeinheit oder eine positionierbare Scannereinheit eines Mikroskops zur Verfügung gestellt, welche zumindest eine erfindungsgemäße hydraulische Positionierungseinheit umfasst. Das die Tischeinheit oder Scannereinheit umfassende Mikroskop kann auch hierbei ein Rasterkraftmikroskop sein.

In einer besonderen Ausgestaltung umfasst die positionierbare Tischeinheit oder positionierbare Scannereinheit eine Mehrzahl der hydraulischen Positionierungseinheiten, wobei mittels jeder der Positionierungseinheiten eine Bewegung des dazu gehörigen Kolbens in einer jeweils anderen Raumkoordinatenrichtung realisierbar ist. Es lassen sich somit Bewegungen des Tisches oder des Scanners z.B. nicht nur in X-Richtung sondern auch in Y- und/oder Z-Richtung durchführen.

In einer besonderen Ausgestaltung ist vorgesehen, dass die positionierbare Tischeinheit oder positionierbare Scannereinheit derart ausgestaltet ist, dass der Zylinder der Positionierungseinheit senkrecht angeordnet ist und die positionierbare Tischeinheit oder Scannereinheit ein Getriebe zur Übersetzung der senkrechten Kolbenbewegung in eine waagerechte Bewegung zur Positionierung des Tisches oder des Scanners umfasst. Der Vorteil liegt hierbei darin, dass der Kolben im Zylinder senkrecht angeordnet ist, so dass er nicht aufgrund seines Eigengewichts veranlasst ist, mit seiner Außenmantelfläche an der Innenmantelfläche des Zylinders zur Anlage zu kommen und somit einen Stick-Slip-Effekt hervorzurufen.

Die Erfindung wird anhand der beiliegenden Zeichnungen erläutert. Es zeigen:
- Figur 1: einen aus dem Stand der Technik bekannten Hydraulikzylinderantrieb;
- Figur 2: eine erfindungsgemäße Positionierungseinheit in schematischer Darstellung;
- Figur 3: eine weitere Darstellung einer erfindungsgemäßen Positionierungseinheit mit angeschlossenem Aktuator;
- Figur 4: ein Schubspannungs-Schergeschwindigkeit-Diagramm für verschiedene Hydraulikflüssigkeiten.

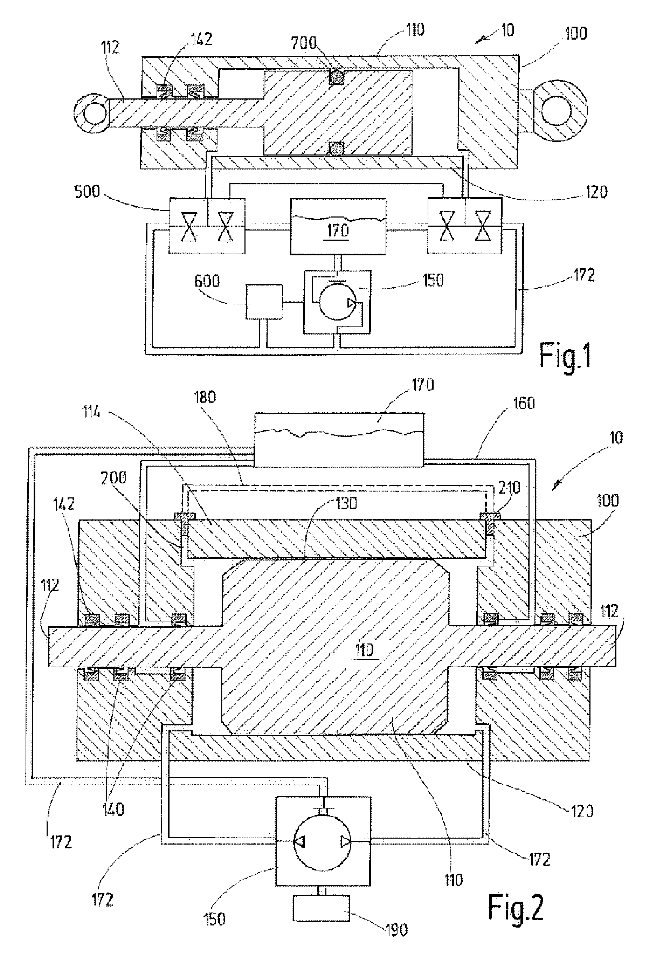

In Figur 1 ist eine Kolben-Zylinder-Einheit 100 dargestellt, wie sie in herkömmlicher Weise verwendet wird. Diese Kolben-Zylinder-Einheit 100 umfasst eine hydraulische Positionierungseinheit 10, die im wesentlichen aus einem Zylinder 120 sowie einem darin verschiebbar angeordneten Kolben 110 besteht, wobei der Kolben einen Dichtring 700 aufweist, der sich aufgrund seines elastischen Rückfederungsverhaltens an den Kolben 110 sowie an den Zylinder 120 anpresst. Der Kolben 110 weist des weiteren eine Kolbenstange 112 auf, die zum Zylinder hin über Abstreifer 142, die ebenfalls als Dichtungen dienen, abgedichtet ist. Über Leitungen 172 sind die an den Stirnflächen des Kolbens 110 angeordneten Räume zur Befüllung mit Hydraulikflüssigkeit mit Ventilen 500 verbunden, die wiederum ebenfalls über Leitungen 172 mit einem Reservoir 170 zur Aufbewahrung von Hydraulikflüssigkeit sowie mit einer Regelungseinheit 600 und einer daran angeschlossenen Pumpe 150 verbunden sind. Im Pumpbetrieb wird Hydraulikflüssigkeit aus dem Reservoir 117 über eines der Ventile 500 in einen der Räume an der Stirnseite des Kolbens 110 gepumpt, so dass sich dort ein Überdruck aufbaut, der je nach am Kolben zur Verfügung stehender Fläche eine Kraft zur Verschiebung des Kolbens 110 bewirkt. Fertigungsbedingt kann zwischen dem Kolben 110 und dem Zylinder 120 ein Ringspalt bestehen, der durch die Dichtung 700 abgedichtet wird. Die durch die Federkraft der Dichtung 700 auf die Mantelfläche des Zylinders 120 wirkende Normalkraft bewirkt bei Verschiebung des Kolbens 110 im Zylinder 120 eine Reibkraft auf die Mantelfläche des Zylinders 120. Solange die durch den Pumpbetrieb bewirkte Druckkraft auf den Kolben geringer ist als die Haftreibungskraft wird der Kolben 110 nicht beschleunigt. Übersteigt die Druckkraft auf den Kolben 110 die durch die Dichtung 700 bewirkte Haftreibungskraft, wird der Kolben 110 beschleunigt. Diese Beschleunigung erfolgt schlagartig, so dass sich der sogenannte Stick-Slip-Effekt einstellt. Dieser Effekt ist wie bereits beschrieben für die Anwendung der Positionierungseinheit in Fällen, in denen eine Position im Nanometer- bzw. Sub-Nanometer-Bereich angefahren werden muss, außerordentlich störend.

In Figur 2 ist eine erfindungsgemäße Positionierungseinheit 10 dargestellt, deren wesentliches Merkmal es ist, dass zwischen dem Kolben 110 und dem Zylinder 120 der Kolben-Zylinder-Einheit 100 ein Bypass bzw. ein Überstromkanal 130 ausgebildet ist. Das heißt, dass im Gegensatz zu den herkömmlichen Kolben-Zylinder-Einheiten zwischen dem Kolben 110 und dem Zylinder 120 kein Dichtring 700 angeordnet ist, der das Überströmen von Hydraulikflüssigkeit von einer Seite des Kolbens 110 zu dessen anderer Seite verhindert.

Der in Figur 2 dargestellte Kolben 110 weist zwei Kolbenstangen 112 auf, die koaxial zueinander im Gehäuse des Zylinders 120 in Gleitlagern 140 gelagert sind, wobei die Gleitlager 140 auch die Funktion von Abstreifern 142 übernehmen können. Die Erfindung ist allerdings dabei nicht auf die Ausführung eines Kolbens 110 mit zwei Kolbenstangen 112 beschränkt, sondern es kann die Erfindung auch durch einen Kolben 110 mit nur einer Kolbenstange 112 realisiert werden, wobei der Kolben sowohl einseitig als auch doppelseitig wirksam ausgebildet sein kann. Im Zylinder 120 sind Austrittsöffnungen von Leitungen 172 angeordnet, die an eine Pumpe 150 angeschlossen sind. Ein Servomotor 190 ist zum Antrieb der Pumpe 150 an dieser angeschlossen.

Beim Betrieb des Servomotors 190 wird die Pumpe 150, die bevorzugt eine Mikroinnenzahnradpumpe ist, angetrieben, so dass die aus einem Reservoir 170 über Leitungen 172 der Pumpe 150 zur Verfügung gestellte Hydraulikflüssigkeit je nach Betriebsrichtung der Pumpe 150 in einen der sich zwischen Zylinder 120 und Stirnfläche des Kolbens 110 ausbildenden Räume gepumpt wird. Wie auch bei herkömmlichen Kolben-Zylinder-Einheiten führt die Zunahme des Volumens von Hydraulikflüssigkeit zwischen Zylinder 120 und Stirnfläche des Kolbens 110 zur Druckkraftbeaufschlagung des Kolbens 110, wodurch sich dieser verschiebt und eine Stellkraft bewirkt. Bei der erfindungsgemäßen Ausgestaltung verbleibt allerdings nicht das volle Volumen der in den Zylinder auf eine Seite des Kolbens 110 geförderte Hydraulikflüssigkeit an der druckkraftbeaufschlagten Seite des Kolbens 110, sondern sie strömt mit einem gewissen Volumenanteil durch den Bypass 130 auf die gegenüber liegende Seite des Kolbens 110. Dies bewirkt, dass der Kolben 110 zumindest abschnittsweise weder direkt mit seiner Mantelfläche mit dem Zylinder 120 noch indirekt über einen Dichtring 700 mit der Zylindermantelfläche in Berührung kommt, wodurch ein Stick-Slip-Effekt vermieden wird. Außerdem bewirkt das Überströmen von Hydraulikflüssigkeit durch den Bypass 130, dass nicht sämtliche von der Pumpe 150 geförderte Hydraulikflüssigkeit zum Druckaufbau verwendet wird, sondern nur ein Teil davon.

Bevorzugt ist dabei die Querschnittsfläche des Bypasses, welche durch die Durchmesser von Kolben und Zylinder und durch das dazwischen bestehende Spaltmaß definiert wird, kleiner als die Querschnittsfläche einer Zufluss-Leitung 172, um die Verschiebung des Kolbens gewährleisten zu können.

Wie bereits beschrieben, wirkt sich bei geringer Pumpleistung der durch den Bypass 130 abfließende Volumenstrom wesentlich stärker aus als bei voller Pumpleistung, in der sich der Abfluss von Hydraulikflüssigkeit durch den Bypass weniger stark bemerkbar macht. Das heißt, dass mittels der erfindungsgemäßen Positionierungseinheit 110 der Kolben 110 bei hoher Pumpleistung mit großer Geschwindigkeit im Zylinder 120 bewegt werden kann, da die durch den Bypass 130 abfließende Hydraulikflüssigkeit im Verhältnis zu der die Druckkraft auf den Kolben 110 bewirkenden Hydraulikflüssigkeitsmenge gering ist. Es lässt sich, wenn der Kolben z.B. 90% des durch ihn zurückzulegenden Weges bis zu einer bestimmten Position gefahren ist, die Pumpleistung derart reduzieren, dass das Verhältnis zwischen der die Druckkraftbeaufschlagung bewirkenden Hydraulikflüssigkeit zu der durch den Bypass 130 abfließenden Hydraulikflüssigkeit geringer wird, so dass sich der Kolben in außerordentlich geringem Maße bewegt. Dadurch, dass der Kolben 110 nicht in mechanischem Kontakt mit dem Zylinder 120 steht und auf Grund des Bypasses lässt sich somit ein sehr sanftes Anfahren der Soll-Position sogar im Sub-Nanometer-Bereich gewährleisten.

Zum wartungsfreien Betrieb weist die Positionierungseinheit 10 weitere Einrichtungen wie z.B. den Rückführkanal 160 auf, der vom Kolben 110 ausgehend hinter dem ersten Gleitlager 140 angeordnet ist und mit dem Reservoir 170 verbunden ist. Dieser Rückführkanal 160 dient dazu, Hydraulikflüssigkeit, welche von dem Gleitlager 140 bzw. dem Abstreifer 142 nicht vollständig von der Kolbenstange 112 entfernt werden konnte, in das Reservoir 170 zurückzuführen. Das Reservoir 170 ist vorteilhafterweise in geodätisch höherer Lage als der Zylinder 120 angeordnet, so dass z.B. im Rückführkanal entstandene Gasblasen im Rückführkanal 160 aufsteigen und im daran angeschlossenen Reservoir 170, welches die Hydraulikflüssigkeit enthält, an die Oberfläche gelangen.

An dem Innenraum des Zylinders 120 sind beidseitig des Kolbens 110 Entlüftungskanäle 200 angeordnet, die mit jeweils einem Verschluss 210 verschlossen sind. Die Entlüftungskanäle 200 dienen ebenfalls der Entgasung von im Zylinder enthaltener Hydraulikflüssigkeit. An die Entlüftungskanäle 200 kann allerdings auch ein zweiter Bypass (gestrichelt dargestellt) 180 angeschlossen werden, durch den ebenfalls, gegebenenfalls ventilgesteuert, das Überströmen von Hydraulikflüssigkeit von einer Seite des Kolbens 110 zu dessen anderer Seite realisiert werden kann. Dieser zweite Bypass dient somit ebenfalls wie der erste, zwischen Kolben 110 und Zylinder 120 angeordnete, Bypass der Beeinflussung der Kolbengeschwindigkeit und somit der hochgenauen Positionierbarkeit.

Der Kolben 110 kann, wie in Figur 2 dargestellt, an seiner Kante zwischen Stirnfläche und Mantelfläche eine Phase 114 aufweisen, die das Einströmen von gegebenenfalls höherviskoser Hydraulikflüssigkeit in den Bypass 130 erleichtert. Dazu kann vorteilhafterweise das Ende der Leitung 172 zur Einfüllung der Hydraulikflüssigkeit in den Zylinder 120 am tiefsten Punkt des Zylinders 120 gegenüber der Phase 114 angeordnet sein. Die vorliegende Erfindung ist allerdings nicht auf die Ausgestaltung des Kolbens mit Phasen 114 und den gegenüber liegenden Enden der Leitungen 172 eingeschränkt.

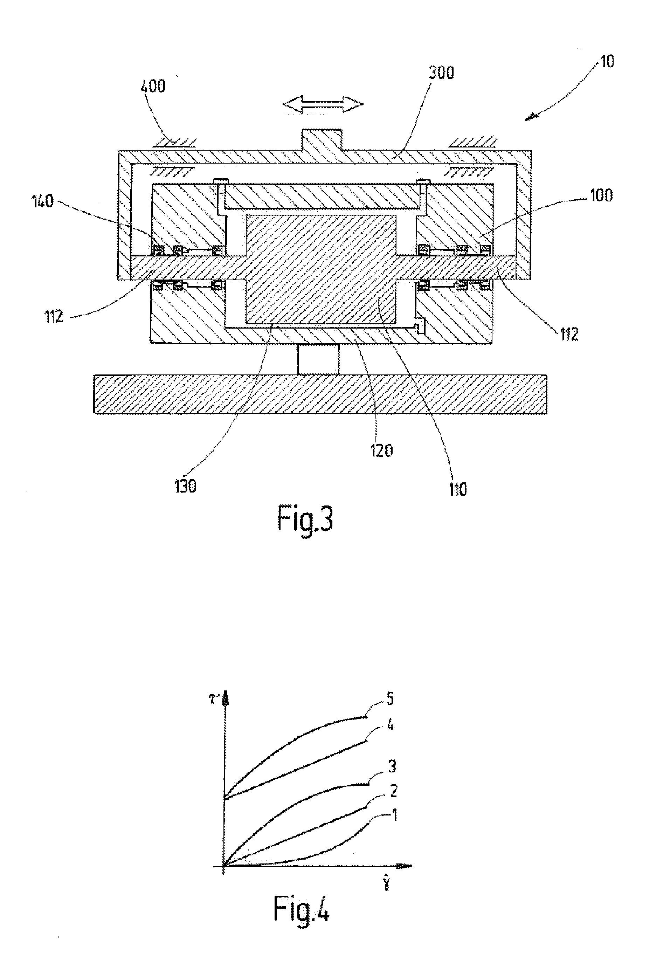

In Figur 3 ist die erfindungsgemäße Positionierungseinheit 110 zusammen mit einem an die Kolbenstangen 112 angeschlossenen Aktuator 300 dargestellt. Der durch den Kolben 110 translatorisch bewegte Aktuator 300 kann, wie dargestellt, in Lagerstellen 400 geführt sein und gleiten, so dass eine Wechselwirkung mit der Führung der Kolbenstangen 112 bzw. des Kolbens 110 derart besteht, dass die Führung durch die Lagerstelle 400 eine zentrische Positionierung des Kolbens 110 im Zylinder 120 unabhängig von der Kolben-Position bewirkt. Dadurch lässt sich in einfacher Weise die Aufrechterhaltung des Bypasses 130 gewährleisten. In diesem Fall müssen die zwischen Zylinder 120 und Kolben 110 angeordneten Gleitlager 140 nicht mehr die volle Abstützung des Kolbens 110 im Zylinder 120 realisieren.

In Figur 4 ist im Schubspannungs-Schergeschwindigkeitsdiagramm dargestellt, welche weiteren Hydraulikflüssigkeiten, die nicht das mit Kurve 2 dargestellte newtonsche Verhalten aufweisen, verwendet werden können. Kurve 2 zeigt ein typisches newtonsches Fluid, welches ein lineares Schubspannungsverhalten aufweist. Zur Realisierung der hochgenauen Positioniergenauigkeit und des Schwimmverhaltens des Kolbens 110 im Zylinder 120 sowie zur Ermöglichung der großen Verfahrwege und hoher Verfahrgeschwindigkeiten lassen sich jedoch auch dilatante Fluide, die mit Kurve 1 verdeutlicht sind, oder auch scherverdünnende (pseudoplastische) Fluide, deren Verhalten mit Kurve 3 dargestellt ist, sowie Bingham-plastische Fluide (Kurve 4) oder Casson-plastische Fluide (Kurve 5) verwenden.

### Bezugszeichenliste

- 1: Dilatantes Fluid
- 2: Newtonsches Fluid
- 3: Scherverdünnendes Fluid
- 4: Bingham-plastisches Fluid
- 5: Casson-plastisches Fluid
- 10: Hydraulische Positionierungseinheit
- 100: Kolben-Zylinder-Einheit
- 110: Kolben
- 112: Kolbenstange
- 114: Fase
- 120: Zylinder
- 130: Bypass, Überstromkanal
- 140: Gleitlager
- 142: Abstreifer
- 150: Pumpe
- 160: Rückführkanal
- 170: Reservoir
- 172: Leitung
- 180: zweiter Bypass
- 190: Servomotor
- 200: Entlüftungskanal
- 210: Verschluss
- 300: Aktuator
- 400: Lagerstelle
- 500: Ventil
- 600: Regelungseinheit
- 700: Dichtring

## Patentansprüche

1. Hydraulische Positionierungseinheit mit einer hydraulisch wirkenden Kolben-Zylinder-Einheit zur Realisierung einer Verstellbewegung eines Aktuators,
**dadurch gekennzeichnet,**
**dass** der Außendurchmesser des Kolbens und der Innendurchmesser des Zylinders derart dimensioniert und geformt ist, dass ein Bypass zwischen der Zylinder-Innenmantelfläche und der Mantelfläche des Kolbens besteht zur Ausbildung eines Raumes, der im Betriebszustand der Positionierungseinheit mit Hydraulikflüssigkeit befüllt ist.

2. Positionierungseinheit nach Anspruch 1,
**dadurch gekennzeichnet,**
**dass** der Außendurchmesser des Kolbens und der Innendurchmesser des Zylinders derart dimensioniert und geformt ist, dass der Raum für die Flüssigkeit zwischen Kolben und Zylinder derart groß ist und geformt ist, dass zumindest bei wenigstens einseitiger Druckbeaufschlagung des Kolbens durch Hydraulikflüssigkeit der Kolben im Zylinder vollständig schwimmend lagerbar ist.

3. Positionierungseinheit nach einem der vorhergehenden Ansprüche,
**dadurch gekennzeichnet,**
**dass** die Kolben-Zylinder-Einheit beidseitig druckbeaufschlagbar ist, wobei der Außendurchmessers des Kolbens und der Innendurchmesser des Zylinders derart dimensioniert und geformt ist, dass durch den Bypass wenigstens ein Überstromkanal zum Überströmen von Hydraulikflüssigkeit von der flüssigkeitsdruckbeaufschlagten Seite des Kolbens zu dessen gegenüberliegender Seite ausgebildet ist.

4. Positionierungseinheit nach wenigstens einem der vorhergehenden Ansprüche,
**dadurch gekennzeichnet,**
**dass** der Durchmesser des Kolbens dK zu dem den Bypass realisierenden Abstand a zwischen Kolben und Zylinder ein Verhältnis aufweist von dK / a = 830...1900.

5. Positionierungseinheit nach Anspruch 4,
**dadurch gekennzeichnet, dass**
der Durchmesser des Kolbens dK zu dem den Bypass realisierenden Abstand a zwischen Kolben und Zylinder ein Verhältnis aufweist von dK / a = 830...1100.

6. Positionierungseinheit nach wenigstens einem der vorhergehenden Ansprüche,
**dadurch gekennzeichnet,**
**dass** der Kolben wenigstens eine in wenigstens einem Gleitlager im Zylinder verschiebbar gelagerte Kolbenstange aufweist, wobei das Gleitlager die Kolbenstange und somit den Kolben derart positioniert, dass sich zwischen den Mantelflächen des Kolbens und des Zylinders der Bypass als ein ringförmiger Spalt ausbildet.

7. Positionierungseinheit nach Anspruch 6,
**dadurch gekennzeichnet,**
**dass** auf der dem Kolben gegenüberliegenden Seite des Gleitlagers im Zylinder ein Rückführkanal angeordnet ist zur Realisierung der Rückführung von an der Kolbenstange anhaftender Hydraulikflüssigkeit in den Zylinder.

8. Positionierungseinheit nach wenigstens einem der vorhergehenden Ansprüche,
**dadurch gekennzeichnet,**
**dass** sie eine Pumpe zur Erzeugung eines Volumenstroms zur Druckbeaufschlagung des Kolbens umfasst, die eine bidirektionale Mikroinnenzahnradpumpe ist.

9. Positionierungseinheit nach wenigstens einem der vorhergehenden Ansprüche,
**dadurch gekennzeichnet,**
**dass** sie ein Weg-Mess-System zur Erfassung der jeweiligen Position des Kolbens umfasst.

10. Positionierungseinheit nach wenigstens einem der vorhergehenden Ansprüche,
**dadurch gekennzeichnet,**
**dass** sie zusätzlich zu dem zwischen Kolben und Zylinder angeordneten Bypass einen zweiten Bypass umfasst, wobei dieser zweite Bypass außerhalb des Zylinders angeordnet ist und ventilgesteuert ist.

11. Verfahren zur Betätigung der Positionierungseinheit nach einem der Ansprüche 1 bis 10,
**dadurch gekennzeichnet, dass**
zum Halten der Position des gegen eine Kolbenrückstellkraft drückenden Kolbens eine Pumpe zur Druckbeaufschlagung des Kolbens ständig betrieben wird.

12. Verwendung einer Positionierungseinheit nach wenigstens einem der Ansprüche 1 bis 10 zur Bewegung eines Positioniertisches oder eines Scanners eines Mikroskops, insbesondere eines Rasterkraftmikroskops.

13. Positionierbare Tischeinheit oder positionierbare Scannereinheit eines Mikroskops,
**dadurch gekennzeichnet, dass**
sie wenigstens eine hydraulische Positionierungseinheit nach wenigstens einem der Ansprüche 1-10 umfasst.

14. Positionierbare Tischeinheit oder positionierbare Scannereinheit nach Anspruch 13,
**dadurch gekennzeichnet,**
**dass** sie eine Mehrzahl der hydraulischen Positionierungseinheiten nach wenigstens einem der Ansprüche 1 bis 10 umfasst, wobei mittels jeder der Positionierungseinheiten eine Bewegung des dazugehörigen Kolbens in einer jeweils anderen Raumkoordinatenrichtung realisierbar ist.

15. Positionierbare Tischeinheit oder positionierbare Scannereinheit nach einem der Ansprüche 13 oder 14,
**dadurch gekennzeichnet,**
**dass** der Zylinder der Positionierungseinheit senkrecht angeordnet ist und die positionierbare Tischeinheit oder positionierbare Scannereinheit ein Getriebe zur Übersetzung der senkrechten Kolbenbewegung in eine waagerechte Bewegung zur Positionierung des Tisches oder des Scanners umfasst.
